# EUROPÄISCHE PATENTSCHRIFT

(11) **EP 2 047 310 B1**
(45) Veröffentlichungstag und Bekanntmachung des Hinweises auf die Patenterteilung: **12.01.2011**
(21) Anmeldenummer: 07785669.8
(22) Anmeldetag: 20.07.2007
(51) Int. Cl.: G02B 7/02, G03B 17/14, F16B 33/00

(54) **Zylinderringe**
Cylinder rings
Anneaux cylindriques

(30) Priorität: 04.08.2006 DE 10636890
(43) Veröffentlichungstag der Anmeldung: 15.04.2009
(73) Patentinhaber: Leica Camera AG, 35606 Solms (DE)
(72) Erfinder: SEITER, Kai, Oliver, 35510 Butzbach (DE)
(74) Vertreter: Stamer, Harald
(86) Internationale Anmeldenummer: PCT/DE2007/001301
(87) Internationale Veröffentlichungsnummer: WO 2008/014753

(56) Entgegenhaltungen:
- US-A- 3 388 647
- US-A- 4 362 419
- US-A- 5 835 289

## Beschreibung

Die Erfindung betrifft Zylinderringe für feinmechanisch optische Geräte mit aufeinander abgestimmten eingängigen Mutter- und Bolzengewinden und senkrecht zur Zylinderachse verlaufenden achsialen Anschlagflächen zwischen den Zylinderringen.

Zylinderringe dieser Art die beispielsweise aus der US5835289 bekannt sind, werden im feinmechanisch-optischen Gerätebau zur Schraubverbindung von Bau- oder Zubehörteilen eingesetzt. Ein Muttergewinde frontseitig an fotografischen Objektiven dient z.B. zur Aufnahme von mit einem Bolzengewinde versehenen Filtern oder Blenden. Ebenso kann ein Objektiv mit einem Bolzengewinde zum Einsetzen in ein Muttergewinde im Gehäuse einer Kamera ausgestattet sein.

Die Zylinderringe haben senkrecht zur Zylinderachse verlaufende achsiale Anschlagflächen, durch die festgelegt wird, wie weit sie ineinander eingeschraubt werden können. Die Anschlagflächen können stirnseitig am Muttergewinde und fußseitig am Bolzengewinde oder umgekehrt vorgesehen sein. Durch entsprechende Dimensionierung der Gewindedurchmesser können die Anschlagflächen jeweils stirn-oder fußseitig zu den Gewindegängen an den Zylinderringen erzeugt werden. Die Anschlagflächen sind Kreisringflächen.

Üblicherweise ist das Muttergewinde der feststehende Teil und das Zubehörteil wird mit dem Bolzengewinde in das Muttergewinde eingeschraubt. Dabei besteht häufig die Forderung, daß das Zubehörteil bezüglich seiner Drehstellung beim Anschlagen der Anschlagflächen gegeneinander eine bestimmte Ausrichtung aufweisen soll. Bei einem in das Kameragehäuse eingeschraubten Objektiv sollen die Beschriftungen auf Stellringen in der Normalhaltung von oben lesbar sein. Ein in ein Objektiv eingeschraubtes Pol-Filter und eine eckige Gegenlichtblende sollen automatisch zum Bildformat ausgerichtet sein.

Die gewünschte Ausrichtung der Drehstellung läßt sich mit einfachen Gewinden wegen der relativ großen Toleranzen beim Eingreifen der Gewinde ineinander nicht erreichen. Aufgrund des für eine Leichtgängigkeit der Gewinde notwendigen Spiels in den Gewindegängen entstehen beim Festdrehen der Anschlagflächen gegeneinander zusätzliche Winkelverdrehungen. Auch sogen. meßpunktgeschnittene Gewinde, die ein radial exakt festgelegtes Eingreifen der Gewinde ermöglicht, besitzen bis zum Festsitzen der Anschlagflächen Toleranzen von bis zu 5° in der Drehstellung.

Zur Befestigung von Zubehörteilen mit automatisch exakter Drehwinkelausrichtung werden daher Bajonettverbindungen gewählt. Diese besitzen Klauen, welche durch Drehbewegung am Gegenstück einhaken. Solche Bajonette bestehen aus sehr komplizierten Frästeilen und benötigen zusätzlich einen Federring zur Sicherung gegen ein unbeabsichtigtes Losdrehen. Ein zusätzlicher Drehanschlag gewährleistet die gewünschte Drehausrichtung. Die genannten Bauteile sind aufwändig in der Herstellung und nehmen einen relativ großen Bauraum in Anspruch.

Der Erfindung lag daher die Aufgabe zugrunde, eine Verbindung zur Aufnahme von Zubehörteilen zu schaffen, die einfach in der Herstellung ist, einen kleinen Bauraum benötigt und eine exakte Winkelausrichtung gewährleistet.

Diese Aufgabe wird erfindungsgemäß mit Zylinderringen der eingangs genannten Art dadurch gelöst, daß sich die dem Muttergewinde und dem Bolzengewinde zugeordneten Anschlagflächen achsial ansteigend über maximal einen Gewindegang erstrecken und am Ende jeweils eine Sprungfläche zwischen den achsial versetzten Anschlagebenen der Anschlagflächen aufweisen. Die Sprungfläche bildet dabei einen definierten Drehanschlag. In der Abwicklung weisen die ansteigenden Anschlagflächen am Muttergewinde und am Bolzengewinde vorzugsweise dasselbe Profil auf. Bei geeigneter Wahl der Steigung der Anschlagflächen kann erreicht werden, daß die achsialen Anschlagflächen bis zum Anschlag am Drehanschlag fest gegeneinander gepreßt werden.

In einer bevorzugten Ausführungsform steigen die Anschlagflächen parallel zur Gewindesteigung an. Für eine optisch vorteilhafte äußere Ansicht ist es zweckmäßig, wenn die den Muttergewinden zugeordneten Anschlagflächen im Innern des Zylinderringes und die den Bolzengewinden zugeordneten Anschlagflächen stirnseitig am Gewindebolzen angebracht sind. Wenn die Sprungflächen parallel zur Zylinderachse ausgerichtet sind, ergibt sich ein besonders stabiler Drehanschlag. Aus fertigungstechnischen Gründen kann es notwendig sein, die Anschlagflächen nicht über die ganze Länge eines Gewindeganges ansteigen zu lassen, so daß sich eine schräg gestellte Sprungfläche ergibt. Auch eine schräg gestellte Sprungfläche hat sich als sicherer Drehanschlag bewährt.

Eine vorteilhafte Herstellung der erfindungsgemäßen Anschlagfläche im Innern des Muttergewindes besteht darin, daß sich an das Ende des im Zylinderring liegenden Muttergewindes eine in radialer Richtung ausgeführte Freifräsung mit rechteckigem Querschnitt anschließt, die annähernd parallel zur Gewindesteigung verläuft und eine Länge von maximal einem Gewindegang hat und wobei die Breite der Freifräsung mindestens der Höhe eines Gewindeganges entspricht und die Tiefe mindestens bis zum Kern des Gewindes reicht. Der Fußbereich des Bolzengewindes wird zweckmäßigerweise mit einem umlaufenden Freistich versehen, in den z.B. ein O-Ring als Verdrehsicherung eingelegt werden kann. Die Höhe des Bolzengewindes und die Tiefe des Muttergewindes sind dazu so aufeinander abzustimmen, daß sich beim Anschlag an den Drehanschlag eine leichte Stauchung des O-Ringes ergibt.

Mit Vorteil können zwei Zylinderringe auch einstückig als ein Adapterring mit Muttergewinde und Bolzengewinde ausgeführt sein, wobei die Sprungflächen in achsialer Richtung miteinander fluchten.

Ausführungsbeispiele der Zylinderringe sind in der Zeichnung schematisch dargestellt und werden nachfolgend anhand der Figuren beschrieben. Dabei zeigen
- Fig.1: Zylinderringe mit innen liegenden Anschlagflächen und parallel zur Zylinderachese ausgerichteter Sprungfläche in teilweise geschnitten perspektivischer Ansicht,
- Fig.2: eine Schnttdarstellung der Anordnung nach Fig.1,
- Fig.3: den Zylinderring mit Muttergewinde aus Fig.1,
- Fig.4: den Zylinderring mit Bolzengewinde aus Fig.1,
- Fig.5: einen Zylinderring mit schräg stehender Sprungfläche im Muttergewinde,
- Fig.6: einen Zylinderring mit Bolzengewinde passend zu Fig.5 und
- Fig.7: Zylinderringe mit von außen sichtbarer Kontur der Anschlagflächen.

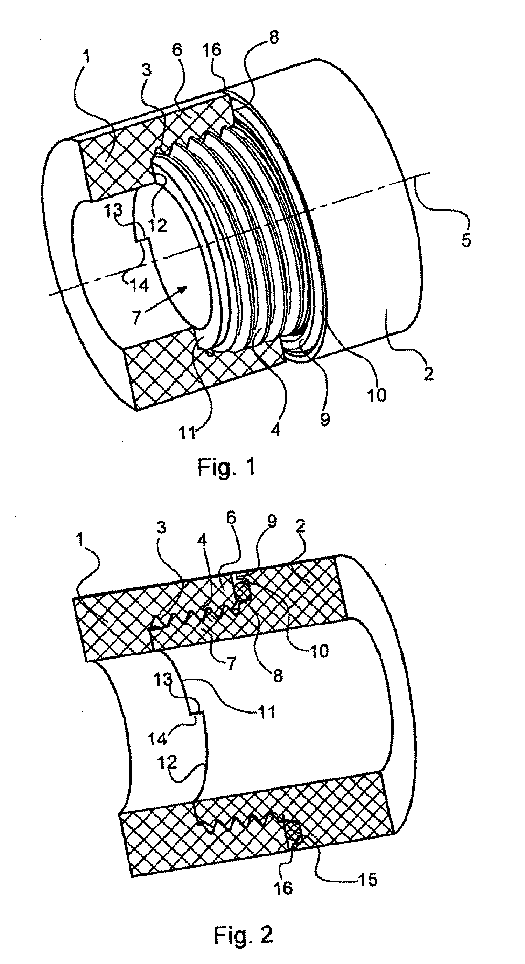

Das in Fig. 1 dargestellte System besteht aus zwei Zylinderringen 1, 2 gleicher Wandstärke. In den Zylinderring 1 ist ein Muttergewinde 3 eingeschnitten. Der Zylinderring 2 ist mit einem Bolzengewinde 4 versehen. Die symmetrisch zur Zylinderachse 5 verlaufenden Gewinde sind in ihrem Durchmesser so gewählt, daß ausreichend starke Wandstärken für den Gewindemantel 6 des Muttergewindes 3 und den Gewindekern 7 des Bolzengewindes 4 entstehen. Die Stirnfläche 8 des Gewindemantels 6 korrespondiert mit einer Fußfläche 9 des Bolzengewindes 4. In die Fußfläche 9 des Bolzengewindes 4 ist eine Nut 10 eingelassen.

Der Gewindekern 7 ist stirnseitig als eine erste Anschlagfläche 11 ausgebildet. Damit korrespondierend ist fußseitig am Muttergewinde 3 eine zweite Anschlagfläche 12 ausgebildet. Die Anschlagflächen 11, 12 stehen senkrecht zur Zylinderachse 5 und steigen achsial über einen Gewindegang an. Der Gewindekern 7 weist in diesem Bereich keinen Gewindegrat auf, so daß er einen achsial ansteigenden Zylinder darstellt, der mit dem Muttergewinde 3 nicht kollidiert. Die Steigungshöhe der gewendelten Anschlagflächen 11, 12 entspricht vorzugsweise der Ganghöhe eine Gewindeganges. Zwischen dem Anfang und dem Ende der jeweiligen Wendel entsteht auf diese Weise eine Sprungfläche 13, 14 mit maximal der Höhe eines Gewindeganges. Die Sprungflächen 13, 14 sind in diesem Ausführungsbeispiel parallel zur Zylinderachse 5 ausgerichtet.

Beim Einschrauben der Gewinde ineinander laufen die Anschlagflächen 11.12 beider letzten Gewindedrehung keilförmig aufeinander zu, bis sie an den Sprungflächen 13, 14 anschlagen. Die Sprungflächen 13, 14 bilden daher den gewünschten definierten Drehanschlag. Durch geeignete Passung der Gewindelängen und Steigungen der Anschlagflächen 11, 12 kann erreicht werden, daß die Anschlagflächen 11, 12 bereits vor Erreichen des Drehanschlags aufeinander reiben, so daß sich beim Erreichen des Drehanschlags eine Losdrehsicherung ergibt. Dies ist insbesondere dann vorteilhaft, wenn die Zylinderringe 1, 2 als Spritzgußteile aus Kunststoff hergestellt werden.

Aus Fig. 2 ist ersichtlich, daß in die Nut 10 an der Fußfläche 9 des Bolzengewindes 4 ein O-Ring 15 eingelegt ist. Die Höhe des Gewindebolzens oder die Tiefe des Muttergewindes 3 sind so gewählt, daß beim Erreichen des Drehanschlags eine leichte Stauchung des O-Ringes 15 gegenüber der Stirnfläche 8 des Gewindemantels 6 als Losdrehsicherung entsteht. Zwischen den Anschlagflächen 11, 12 kann dabei eine minimaler Luftspalt bestehen bleiben. Die Gewindeflanken des Mutter- und Bolzengewindes werden auf diese Weise gegen Beschädigungen durch gegenseitiges Verspannen zur Losdrehsicherung geschützt. Zwischen den beiden Zylinderringen 1, 2 verbleibt in Endstellung ein geringer Spalt 16.

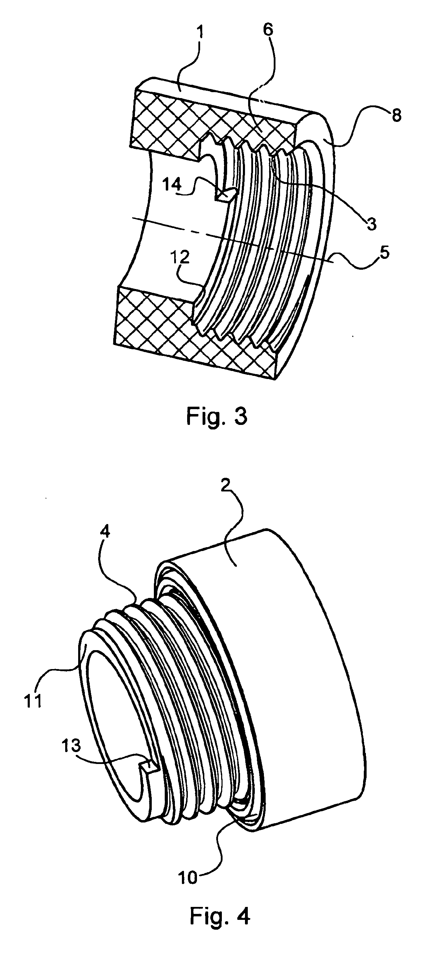

Aus den Fig. 2 und 3 ist nochmals in Einzeldarstellung die Form der Anschlagflächen 11, 12 und der Sprungflächen 13, 14 zu entnehmen.

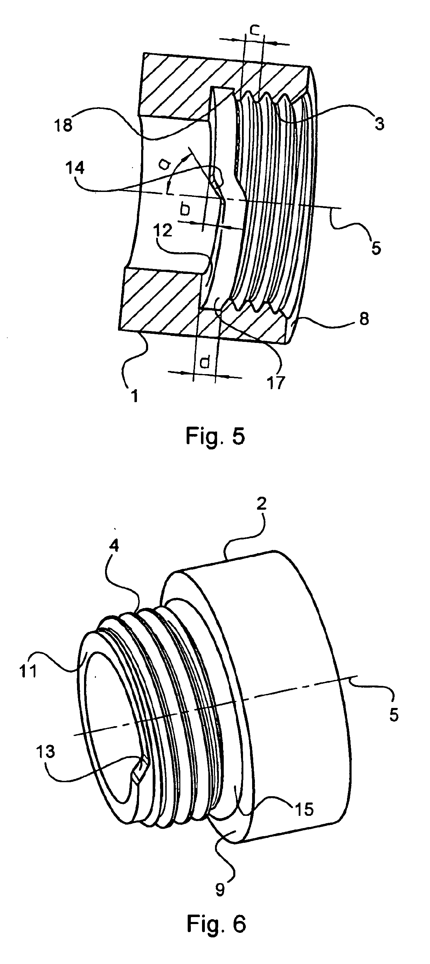

Die Fig. 5 und 6 zeigen in Einzeldarstellung Zylinderringe 1, 2 mit Muttergewinde 3 und Bolzengewinde 4, die vorzugsweise aus Metall gefertigt sind, weil sie für eine Spritzgußfertigung nicht geeignete Hinterschneidungen aufweisen.

Bei dem in Fig. 5 dargestellten Muttergewinde 3 ist am innen liegenden Gewindeende eine Freifräsung 17 mit rechteckigem Profil vorgesehen. Die Freifräsung wird mit einem Fräser vom Durchmesser (d) von innen in achsialer Richtung ansteigend in die Mutter gefräst. Die Anschlagfläche 12 enthält dabei eine um den Winkel (a) schräg gestellte Sprungfläche 14. Die Schrägstellung ergibt sich durch das Einsetzen und den Auslauf des Fräsers aus der Freifräsung im Bereich der Sprungfläche 14. Die Steigung (b) der achsial ansteigenden Wendel der Anschlagfläche 12 von der Oberkante bis zur Unterkante der Sprungfläche 14 sollte etwas kleiner als die Gewindesteigung (c) gewählt werden. Die achsiale Position der Freifräsung 17 ist vorzugsweise so zu wählen, daß keine spitzwinklige Kante 18 an der angrenzenden Gewindeflanke entsteht. Die Tiefe der Freifräsung ist bis zum Kern des Muttergewindes 3 ausgeführt.

Bei dem in Fig. 6 dargestellten Bolzengewinde 4 wird stirnseitig zunächst ein zylindrisches Ende aus dem Gewindekern in Höhe maximal eines Gewindeganges hergestellt. In diesen wird die Sprungfläche 13 eingefräst und danach wird das Material wendelförmig mit maximal der Gewindesteigung abgetragen, bis die Oberkante der Sprungfläche 13 erreicht ist. Die auf diese Weise entstehende Anschlagfläche 11 bildet den achsialen Anschlag des Bolzengewindes 4. Die Kontur der Anschlagfläche 11 am Bolzengewinde 4 soll in der Abwicklung vorzugsweise der Kontur der Anschlagfläche 12 in der Freifräsung 17 am Muttergewinde 3 gleich sein.

Im Fußbereich des Bolzengewindes 4 ist ein umlaufender Freistich in das Gewinde eingefräst, in den ein O-Ring 15 eingelegt ist. Die Länge des Muttergewindes 3 ist so gewählt, daß beim Zusammenschrauben der Zylinderringe 1, 2 bis an die Sprungflächen 13, 14 der O-Ring 15 eine leichte Stauchung zur Losdrehsicherung erfährt.

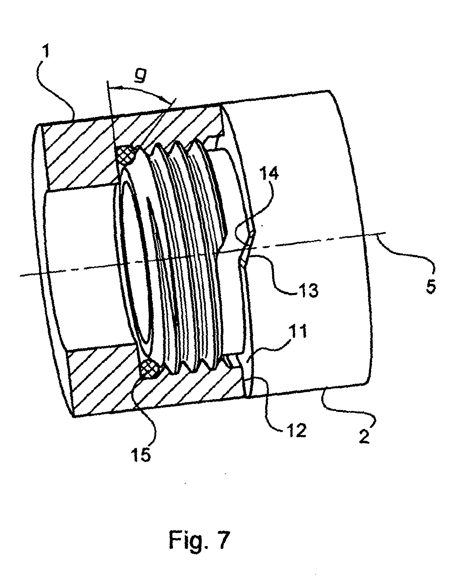

In den zylindrischen Ringteil des Bolzengewindes 4 kann zur Herstellung eines Adapterringes auch zusätzlich ein Muttergewinde eingeschnitten sein, wie es in Fig. 5 dargestellt ist. Dabei ist darauf zu achten, daß die Sprungflächen 13, 14 in achsialer Richtung miteinander fluchten. Die radiale Lage der Sprungflächen 13, 14 kann jeweils außen auf den Zylinderringen 1, 2 markiert sein. Die zu verbindenden Zubehörteile können dann hinsichtlich der gewünschten Drehausrichtung relativ zu diesen Markierungen eingesetzt werden. Fig. 7 zeigt eine alternative Anordnung der Anschlagflächen 11, 12 im Fußbereich des Bolzengewindes 4 und stirnseitig am Muttergewinde 3. Der gewendelte Verlauf der Anschlagflächen 11, 12 und die schräg gestellten Sprungflächen 13, 14 sind bei dieser Anordnung von außen an den Zylinderringen 1, 2 sichtbar. Ein O-Ring 15 als Losdrehsicherung kann bei dieser Anordnung innen in das Muttergewinde 3 eingelegt sein. Dazu wird das stirnseitig auslaufende Bolzengewinde 4 zweckmäßigerweise unter einem Winkel (g) gegenüber der Fußfläche des Muttergewindes 3 abgeschrägt.

Selbstverständlich kann diese Anordnung auch analog bei der Ausführungsform nach Fig. 1 angewendet werden.

### Bezugszeichenliste

- 1,2: Zylinderringe
- 3: Muttergewinde
- 4: Bolzengewinde
- 5: Zylinderachse
- 6: Gewindemantel Muttergewinde
- 7: Gewindekern Bolzengewinde
- 8: Stirnfläche Gewindemantel
- 9: Fußfläche Bolzengewinde
- 10: Nut
- 11: Anschlagfläche am Bolzengewinde
- 12: Anschlagfläche am Muttergewinde
- 13: Sprungfläche am Bolzengewinde
- 14: Sprungfläche am Muttergewinde
- 15: O-Ring
- 16: Spalt
- 17: Freifräsung
- 18: Kante an Gewindeflanke
- a: Schrägwinkel an Sprungfläche
- b: Wendelsteigung der Anschlagflächen
- c: Gewindesteigung
- d: Höhe der Freifräsung
- g: Schrägwinkel stirnseitig Bolzengewinde

## Patentansprüche

1. Zylinderringe für feinmechanisch-optische Geräte, wobei die Zylinderringe mit aufeinander abgestimmten eingängigen Mutterund Bolzengewinden und senkrecht zur Zylinderachse verlaufenden achsialen Anschlagflächen zwischen den Zylinderringen versehen sind, **dadurch gekennzeichnet, daß** sich die dem Muttergewinde (3) und dem Bolzengewinde (4) zugeordneten Anschlagflächen (11, 12) achsial ansteigend über maximal einen Gewindegang erstrecken und am Ende jeweils eine Sprungfläche (13,14) zwischen den achsial versetzten Anschlagebenen der Anschlagflächen (11, 12) aufweisen.

2. Zylinderringe nach Anspruch 1, **dadurch gekennzeichnet, daß** die Anschlagflächen (11, 12) annähernd parallel zur Gewindesteigung ansteigen.

3. Zylinderringe nach Anspruch 1, **dadurch gekennzeichnet, daß** die den Muttergewinden (3) zugeordneten Anschlagflächen (12) im Innern des Zylinderringes (1) und die den Bolzengewinden (4) zugeordneten Anschlagflächen (11) stirnseitig am Gewindebolzen angebracht sind.

4. Zylinderringe nach Anspruch 1, **dadurch gekennzeichnet, daß** die Sprungflächen (13, 14) parallel zur Zylinderachse (5) ausgerichtet sind.

5. Zylinderringe nach Anspruch 1, **dadurch gekennzeichnet, daß** die Länge der Anschlagflächen (11, 12) kleiner als die Länge eines Gewindeganges sind und die Sprungflächen (13, 14) schräg gestellt sind.

6. Zylinderringe nach Anspruch 2, **dadurch gekennzeichnet, daß** sich an das Ende des im Zylinderring (1) liegenden Muttergewindes (3) eine in radialer Richtung ausgeführte Freifräsung (17) mit rechteckigem Querschnitt anschließt, die annähernd parallel zur Gewindesteigung verläuft und eine Länge von maximal einem Gewindegang hat und wobei die Breite der Freifräsung (17) mindestens der Höhe eines Gewindeganges entspricht und die Tiefe mindestens bis zum Kern des Gewindes reicht.

7. Zylinderringe nach Anspruch 3, **dadurch gekennzeichnet, daß** der Fußbereich des Bolzengewindes (4) einen umlaufenden Freistich zur Aufnahme eines O-Ringes (15) aufweist.

8. Zylinderringe nach Anspruch 1, **dadurch gekennzeichnet, daß** sie einstückig mit einem Muttergewinde (3) und einem Bolzengewinde (4) ausgeführt sind, wobei die Sprungflächen (13, 14) in achsialer Richtung miteinander fluchten.

## Claims

1. Cylinder rings for precision mechanical and optical apparatuses, the cylinder rings being provided with mutually coordinated single-flight nut threads and bolt threads and with axial stop faces, running perpendicularly to the cylinder axis, between the cylinder rings, **characterized in that** the stop faces (11, 12) assigned to the nut thread (3) and to the bolt thread (4) extend, axially upward, over a maximum of one thread flight and have at the end in each case a jump face (13, 14) between the axially offset stop planes of the stop faces (11, 12).

2. Cylinder rings according to Claim 1, **characterized in that** the stop faces (11, 12) rise upward approximately parallel to the thread pitch.

3. Cylinder rings according to Claim 1, **characterized in that** the stop faces (12) assigned to the nut threads (3) are formed inside the cylinder ring (1) and the stop faces (11) assigned to the bolt threads (4) are formed on the end face of the threaded bolt.

4. Cylinder rings according to Claim 1, **characterized in that** the jump faces (13, 14) are oriented parallel to the cylinder axis (5).

5. Cylinder rings according to Claim 1, **characterized in that** the length of the stop faces (11, 12) is smaller than the length of a thread flight, and the jump faces (13, 14) are inclined.

6. Cylinder rings according to Claim 2, **characterized in that** the end of the nut thread (3) lying in the cylinder ring (1) is followed by a milled clearance (17) of rectangular cross section which is formed in the radial direction and which runs approximately parallel to the thread pitch and has a length of a maximum of one thread flight, the width of the milled clearance (17) corresponding at least to the height of a thread flight, and the depth extending at least as far as the core of the thread.

7. Cylinder rings according to Claim 3, **characterized in that** the foot region of the bolt thread (4) has a peripheral relief groove for receiving an O-ring (15).

8. Cylinder rings according to Claim 1, **characterized in that** they are formed in one piece with a nut thread (3) and with a bolt thread (4), the jump faces (13, 14) being in alignment with one another in the axial direction.

## Revendications

1. Anneaux cylindriques pour appareils optiques à mécanisme de précision, les anneaux cylindriques étant pourvus de filetages d'écrou et de boulon à un filet adaptés l'un à l'autre et de surfaces de butée axiales s'étendant perpendiculairement à l'axe des cylindres entre les anneaux cylindriques, **caractérisés en ce que** les surfaces de butée (11, 12) associées au filetage d'écrou (3) et au filetage de boulon (4) s'étendent en montant axialement sur un filet au maximum, et présentent à l'extrémité à chaque fois une surface de saut (13, 14) entre les plans de butée décalés axialement des surfaces de butée (11, 12).

2. Anneaux cylindriques selon la revendication 1, **caractérisés en ce que** les surfaces de butée (11, 12) montent approximativement parallèlement au pas de filetage.

3. Anneaux cylindriques selon la revendication 1, **caractérisés en ce que** les surfaces de butée (12) associées aux filetages d'écrou (3) sont montées à l'intérieur de l'anneau cylindrique (1) et les surfaces de butée (11) associées aux filetages de boulon (4) sont montées du côté frontal sur le boulon fileté.

4. Anneaux cylindriques selon la revendication 1, **caractérisés en ce que** les surfaces de saut (13, 14) sont orientées parallèlement à l'axe des cylindres (5).

5. Anneaux cylindriques selon la revendication 1, **caractérisés en ce que** la longueur des surfaces de butée (11, 12) est plus petite que la longueur d'un filet et les surfaces de saut (13, 14) sont orientées obliquement.

6. Anneaux cylindriques selon la revendication 2, **caractérisés en ce qu'**une découpe fraisée (17) réalisée dans la direction radiale à l'extrémité du filetage d'écrou (3) situé dans l'anneau cylindrique (1) se raccorde avec la section transversale rectangulaire qui s'étend approximativement parallèlement au pas de filetage, et présente une longueur de un filet au maximum, la largeur de la découpe fraisée (17) correspondant au moins à la hauteur d'un filet et la profondeur allant au moins jusqu'au coeur du filetage.

7. Anneaux cylindriques selon la revendication 3, **caractérisés en ce que** la région de base du filetage de boulon (4) présente un dégagement par rainure périphérique pour recevoir un joint torique (15).

8. Anneaux cylindriques selon la revendication 1, **caractérisés en ce qu'**ils sont réalisés d'une seule pièce avec un filetage d'écrou (3) et un filetage de boulon (4), les surfaces de saut (13, 14) étant alignées l'une avec l'autre dans la direction axiale.
